# DEMANDE DE BREVET EUROPEEN

(11) **EP 1 615 147 A1**
(43) Date de publication de la demande: **11.01.2006**
(21) Numéro de dépôt: 04291725.2
(22) Date de dépôt: 08.07.2004
(51) Int. Cl.: G06F 17/30

(54) **Transformation optimisée d'opération de recherche LDAP en requête SQL**

(71) Demandeur: FRANCE TELECOM, 75015 Paris (FR)
(72) Inventeur: Lepetit, Yann, 22300 Lannion (FR); Lebrun, Gilles, 22300 Ploulech (FR); Aubertin, Laurent, 22700 Louannec (FR)
(74) Mandataire: Cabinet Martinet & Lapoux

(57) **Abrégé**

Un procédé pour transformer une opération de recherche (OR) en au moins une requête, l'opération incluant notamment un premier filtre (PF), des premiers attributs résultats, un point de départ (PD) et une étendue de recherche (ER), comprend une détermination (E1) de classes d'objet concernées par l'opération en fonction de règles structurelles (RS), une décomposition (E3) du premier filtre en des premiers filtres locaux (PFL) respectivement pour les classes déterminées, et pour chaque classe déterminée dont le premier filtre local n'est pas vide, une transformation (E4) des premiers attributs résultats en des deuxièmes attributs résultats, et du premier filtre local en un deuxième filtre local, une détermination (E10) de tables associées aux deuxièmes attributs résultats et aux deuxièmes attributs du deuxième filtre local, et une construction de la requête avec les deuxièmes attributs résultats, le deuxième filtre local et les tables déterminées.

## Description

La présente invention concerne un procédé de transformation automatique d'une opération de recherche associée à une étendue de recherche formatée en au moins une requête.

Plus particulièrement, une opération de recherche selon le protocole LDAP (Lightweight Directory Access Protocol) est à transformer automatiquement en au moins une requête formatée selon le langage SQL (Structured Query Language).

Dans l'état de la technique, des systèmes de transformation d'opération de recherche LDAP en requête SQL sont basés sur des annuaires de méta - données dits "MetaDirectory", ou plus récemment sur des annuaires virtuels dits "VirtualDirectory". Ces systèmes utilisent souvent le procédé de décomposition d'une opération de recherche LDAP proposé par l'Université du Michigan lors de l'élaboration de la première version du protocole LDAP. Dans ce procédé, l'opération de recherche est décomposée en autant de requêtes SQL que d'attributs LDAP apparaissant dans le premier filtre (ou filtre de recherche) de l'opération de recherche. Par conséquent, le nombre de requêtes SQL n'est pas optimisé.

D'autres systèmes proposent une transformation reposant sur des tables relationnelles binaires mémorisant des attributs LDAP associés à des identificateurs LDAP, mais ne conviennent pas lorsque la base de données relationnelles existe au préalable dans les systèmes, comme décrit dans le brevet US 6 356 892.

La présente invention a pour **objectif** de transformer automatiquement une opération de recherche LDAP en au moins une requête SQL afin d'interroger depuis une opération de recherche LDAP une base de données relationnelles et non pas un annuaire, tout en optimisant ladite au moins une requête SQL.

Pour atteindre cet objectif, un procédé de transformation d'une opération de recherche en au moins une requête, l'opération de recherche incluant notamment un premier filtre comportant au moins une assertion relative à des premiers attributs de filtrage, des premiers attributs résultats, un point de départ défini par des assertions relatives à des premiers attributs, et une étendue de recherche définie par un nombre entier, est caractérisé en ce qu'il comprend les étapes suivantes :
mémorisation préalable de définitions de classes d'objet et de règles structurelles dans un fichier de correspondance établi en fonction de la structure d'une base de données relationnelles préexistante,
détermination des classes d'objet concernées par la recherche en fonction des règles structurelles, du point de départ et de l'étendue de recherche,
détermination des premiers attributs résultat de chaque classe d'objet déterminée en fonction des règles structurelles et des définitions des classes d'objet,
décomposition et optimisation du premier filtre en des premiers filtres locaux respectivement pour les classes d'objet déterminées, et
pour chaque classe déterminée dont le premier filtre local n'est pas vide :
   transformation de chaque premier attribut résultat déterminé et associé à la classe en un ou plusieurs deuxièmes attributs résultats associés à la classe en fonction du fichier de correspondance,
   transformation de chaque attribut de filtrage du premier filtre local associé à la classe en un ou plusieurs deuxièmes attributs de filtrage en fonction du fichier de correspondance,
   détermination des assertions de jointures associées à la classe relatives au point de départ et à l'étendue de recherche,
   agrégation des assertions du premier filtre local relatives aux deuxièmes attributs de filtrage, des assertions du point de départ et des assertions de jointures associées à la classe relatives au point de départ et à l'étendue de recherche associées à la classe afin de déterminer un deuxième filtre local associée à la classe et incluant des deuxièmes attributs de filtrage,
   détermination des tables de données relationnelles associées aux deuxièmes attributs résultats et aux deuxièmes attributs de filtrage, et
   construction de la requête associée à la classe avec les deuxièmes attributs résultats, le deuxième filtre local et les tables de données déterminées associés à la classe.

Ainsi l'invention ne modifie pas avantageusement la base de données relationnelles existante incluant les tables de données relationnelles.

Le procédé peut comprendre une mémorisation préalable de jointures de tables dans le fichier de correspondance.

Lorsque le fichier de correspondance comprend des jointures de tables, le procédé peut comprendre pour chaque classe déterminée dont le premier filtre local n'est pas vide, des étapes supplémentaires telles que : une détermination des assertions de jointure relatives aux deuxièmes attributs résultats associés à la classe et une agrégation des assertions de jointure relatives aux deuxièmes attributs résultats associés à la classe et des assertions du deuxième filtre local associé à la classe dans le deuxième filtre local associé à la classe et/ou une détermination des assertions de jointure relatives aux deuxièmes attributs de filtrage associés à la classe et une agrégation des assertions de jointure relatives aux deuxièmes attributs de filtrage associés à la classe et des assertions du deuxième filtre local associé à la classe dans le deuxième filtre local associé à la classe.

L'invention concerne également un serveur d'opération de recherche pour transformer une opération de recherche en au moins une requête, l'opération de recherche incluant notamment un premier filtre comportant au moins une assertion relative à des premiers attributs de filtrage, des premiers attributs résultats, un point de départ défini par des assertions relatives à des premiers attributs, et une étendue de recherche définie par un nombre entier. Le serveur d'opération de recherche est caractérisé en ce qu'il comprend :
un moyen de mémorisation préalable de définitions de classes d'objet et de règles structurelles dans un fichier de correspondance établi en fonction de la structure d'une base de données relationnelles préexistante et liée au serveur d'opérations de recherche,
un moyen de détermination des classes d'objet concernées par' la recherche en fonction des règles structurelles, du point de départ et de l'étendue de recherche,
un moyen de détermination des premiers attributs résultat de chaque classe d'objet déterminée en fonction des règles structurelles et des définitions de classes d'objet,
un moyen de décomposition et d'optimisation du premier filtre en des premiers filtres locaux respectivement pour les classes d'objet déterminées, et
les moyens suivants pour construire la requête associée à chaque classe déterminée dont le premier filtre local n'est pas vide :
   un moyen de transformation de chaque premier attribut résultat déterminé et associé à la classe en un ou plusieurs deuxièmes attributs résultats associés à la classe en fonction du fichier de correspondance,
   un moyen de transformation de chaque premier attribut de filtrage du premier filtre local associé à la classe en un ou plusieurs deuxièmes attributs de filtrage en fonction du fichier de correspondance,
   un moyen de détermination des assertions de jointures associées à la classe relatives au point de départ et à l'étendue de recherche,
   un moyen d'agrégation des assertions du premier filtre local relatives aux deuxièmes attributs de filtrage, des assertions du point de départ et des assertions de jointures associées à la classe relatives au point de départ et à l'étendue de recherche associées à la classe afin de déterminer un deuxième filtre local associée à la classe et incluant des deuxièmes attributs de filtrage,
   un moyen de détermination des tables de données relationnelles associées aux deuxièmes attributs résultats et aux deuxièmes attributs de filtrage, et
   un moyen de construction de la requête associée à la classe avec les deuxièmes attributs résultats, le deuxième filtre local et les tables de données déterminées associés à la classe.

Le serveur d'opération de recherche comprend des moyens pour la mise en oeuvre des étapes supplémentaires du procédé.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la figure 1 est un tableau d'abréviations associées à des premiers attributs LDAP ;
- la figure 2 est une instance d'arbre d'information selon l'invention ;
- la figure 3 est une représentation arborescente de règles structurelles d'un arbre d'information selon l'invention ;
- la figure 4 est un bloc-diagramme schématique d'un système de transformation d'opération de recherche LDAP en au moins une requête SQL pour la mise en oeuvre d'un procédé de transformation d'une opération de recherche LDAP en au moins une requête SQL selon l'invention ;
- la figure 5 est un algorithme du procédé de transformation d'une opération de recherche LDAP en au moins une requête SQL selon l'invention ;
- la figure 6 est une représentation schématique d'un arbre de résultat selon un exemple de l'invention ;
- la figure 7 est une représentation arborescente d'un premier filtre selon un exemple de l'invention ;
- les figures 8 et 9 sont respectivement des représentations arborescentes de premiers filtres locaux selon l'exemple de l'invention ; et
- la figure 10 est un algorithme d'un procédé de décomposition et d'optimisation d'un premier filtre en au moins un premier filtre local optimisé mis en oeuvre dans le procédé de transformation d'une opération de recherche LDAP en au moins une requête SQL selon l'invention.

Dans la suite de la description, un annuaire est un annuaire LDAP fonctionnant selon le protocole LDAP (Lightweight Directory Access Protocol).

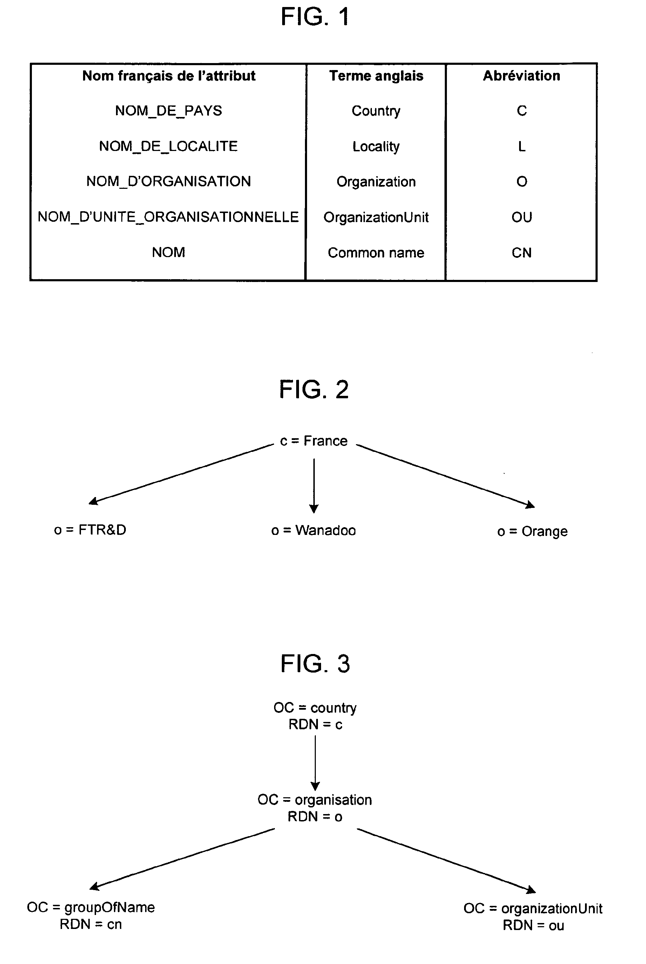

L'annuaire repose sur la notion d'entrée. Une entrée est une représentation d'un objet et est constituée de données élémentaires appelées premiers attributs. Les premiers attributs sont désignés par un nom ou une abréviation ou un synomyme du nom. Par exemple, l'abréviation "1" correspond au premier attribut de nom "locality" ("localité" en français). D'autres exemples de premiers attributs respectivement associés à leurs abréviations ainsi qu'aux termes français correspondants sont montrés à la figure 1. Un premier attribut est défini par un type et peut avoir une ou plusieurs valeurs d'attribut. Les premiers attributs d'une entrée sont obligatoires ou optionnels.

Deux entrées sont dites de même classe lorsqu'elles partagent le même type de premier attribut. Une classe d'objet est définie par l'ensemble des premiers attributs qui la composent. Par exemple, la classe "personne" ("person") est définie par des premiers attributs obligatoires "nom" ("name") et "nom_de_la_famille" et optionnels "description", "numero_de_telephone", "mot_de_passe", etc. Deux entrées partageant les mêmes premiers attributs que la classe "PERSONNE" sont dites de même classe. Une classe d'objets peut être une sous-classe d'une autre classe appelée classe mère, lorsque celle-ci hérite de tous les types de premiers attributs obligatoires et optionnels de la classe mère. Un premier attribut peut appartenir à plusieurs classes, par exemple le premier attribut "nom" appartient notamment aux classes "personne", "personne_organisationnelle" ("inetOrgPerson") "groupe_de_noms" ("groupOfName").

L'ensemble des entrées d'un annuaire forme une base d'informations appelée DIB (Directory Information Base). Les entrées de la base DIB sont rangées sous la forme d'un arbre d'information appelé DIT (Directory Information Tree). Des règles structurelles de l'arbre d'information sont définies dans la recommandation, par exemple la recommandation RFC 2252 de l'IETF (Internet Engineering Task Force), et sont également des correspondances sous forme de jointure des recommandations dans la base de données. Un exemple d'arbre d'information est montré à la figure 2.

Dans cet arbre, l'assertion "c = France" fait référence à une entrée de la classe "country" ("pays"), tandis que les assertions suivantes "o = FTR&D", "o = Wanadoo", "o = Orange" font références à des entrées de la classe "organization" ("organisation").

Dans cet arbre, chaque entrée de l'annuaire à un nom relatif RDN (Relative Distinguished Name), composé généralement d'une assertion entre le type de premier attribut et sa valeur, par exemple un nom relatif est "o = FTR&D". Chaque entrée a un nom distinctif DN (Distinguished Name) obtenu par l'agrégation des noms relatifs des mères dans l'arbre et du nom relatif de l'entrée. Par exemple, l'entrée ayant le nom relatif "o = FTR&D" a pour nom distinctif "c = France, o = FTR&D". Le nom distinctif représente le chemin utilisé dans l'arbre pour atteindre une entrée et se réfère de manière non ambiguë à l'entrée.

Les entrées sont recherchées au moyen d'une opération de recherche, c'est-à-dire d'une suite d'expressions formatées selon le protocole LDAP. Par exemple, l'opération de recherche suivante:
ldapsearch basedn : "o=FTR&D c=France" scope : "2" filter : "cn= Smith" result : givenName cn telephoneNumber
   correspond à une recherche du prénom, du nom et des numéros de téléphone (fixe et mobile par exemple) de chaque entrée ayant pour nom "Smith" dans l'organisation "FTR&D" du pays "France", quelle que soit la classe de l'entrée les entrées recherchées sont seulement des filles de l'entrée de départ désignée par "o=FTR&D c=France" dans le DIT et satisfont le filtre "cn= Smith".Les principaux paramètres d'une opération de recherche sont un point de départ PD ("basedn" dans l'exemple), au moins un premier attribut résultat ("result" dans l'exemple), un premier filtre PF ("filter" dans l'exemple), et une étendue de recherche ER ("scope" dans l'exemple).

Les premiers attributs résultats dont les valeurs sont recherchées dans l'annuaire sont dans l'exemple précédent les attributs résultats "givenName" "cn" et "telephoneNumber". Un premier filtre de recherche est composé d'une suite d'assertions élémentaires ; dans l'exemple précédent, le premier filtre est "cn = Smith". Une assertion élémentaire comporte un opérateur de comparaison ou de recherche sur une sous chaîne de caractères tel que ≤, =, ≥, %. Les assertions élémentaires peuvent être combinées par des opérateurs logiques tel que ! (NON), | (OU), & (ET) pour constituer un premier filtre. Par exemple, une assertion élémentaire est "cn = Legrand", un premier filtre est "!(cn = Legrand)" et signifie que le nom doit être différent de "Legrand". Par exemple, l'opération de recherche "ldapsearch (&(|(cn = Dupond)(cn = Legrand))(c = France))" correspond à une recherche dans l'annuaire de toutes les entrées ayant comme nom "Dupond" ou "Legrand" et résidant en "France". Une étendue de recherche ("scope") peut être précisée en indiquant par exemple, l'ensemble du sous-arbre situé en dessous du point de départ (scope = 2), ou uniquement le niveau hiérarchique dans l'arbre en dessous du point de départ (scope = 1), ou seulement le point de départ (scope = 0). Un point de départ ("basedn") est le premier noeud d'un sous-arbre dans l'arbre d'information DIT. Le point de départ est défini par une suite d'assertions, par exemple "o=FTR&D c=France".

Dans le langage SQL, l'opération de recherche est remplacée par une requête SQL. Une requête SQL est composée de deuxièmes attributs résultats formant une dite clause "select", de tables de données, formant une dite clause "from", dans lesquelles est effectuée la recherche, et d'un deuxième filtre de recherche DF, dite clause "where". Par exemple, dans la requête suivante "select name, client from list where labname = "multimedia" ", "name" et "client" sont les noms des deuxièmes attributs résultats, "list" est le nom de la table de données et la clause "where" est "labname = "multimedia". Lorsque la recherche est effectuée dans plusieurs tables, le nom de chaque deuxième attribut est préfixé par le nom de la table à laquelle appartient le deuxième attribut. Par exemple, le nom du deuxième attribut "name" est remplacé par "list.name", puisque le deuxième attribut "name" appartient à la table "list".

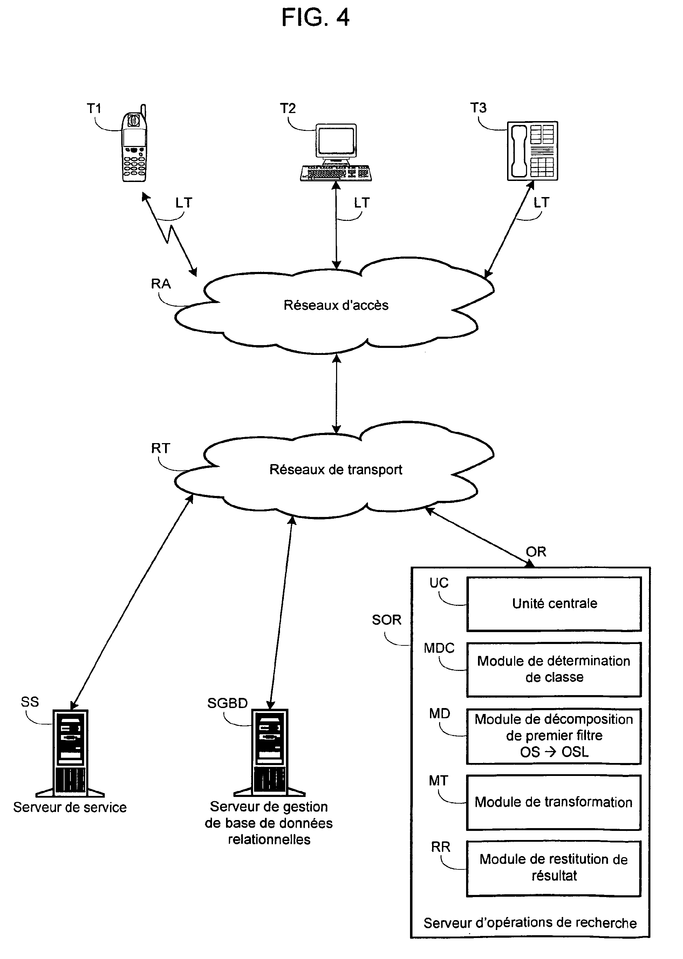

En référence à la figure 4, un système mettant en oeuvre le procédé de transformation selon l'invention comprend principalement un serveur d'opérations de recherche SOR, un serveur de gestion de base de données relationnelles SGBD, au moins un terminal T, et éventuellement un ou plusieurs serveurs de services SS gérant des applications complexes (site web, commande de commutateur fixe, commande de commutateur mobile, commande de routeur IP, gestion de réseaux, systèmes d'information, etc).

Le serveur d'opérations de recherche SOR communique avec le serveur de gestion SGBD, le terminal T et le serveur de services SS à travers un réseau de télécommunication RT de type internet et des réseaux d'accès respectifs RA.

Le terminal T et le serveur de services SS peuvent continuer à communiquer avec le serveur de gestion SGBD, en lui transmettant des requêtes SQL qui ne sont pas préalablement modifiées.

Le serveur d'opération de recherche SOR offre au terminal T ou au serveur de service SS une interface d'accès à un service de recherche. Par exemple, le serveur d'opérations de recherche SOR est un serveur web classique et les opérations de recherche sont exprimées dans le langage DSML (Directory Single Markup Language). Le langage DSML est une spécialisation du langage XML (eXtensible Markup Language) appliquée au protocole LDAP. Dans un autre exemple, le serveur d'opérations de recherche SOR est analogue à un serveur LDAP et les opérations de recherche sont formatées selon le protocole LDAP.

Le serveur d'opérations de recherche comprend principalement une unité centrale UC, un module de détermination de classe MDC, un module de décomposition de premier filtre MD, un module de transformation MT, et un module de restitution de résultat RR.

Dans une variante, les modules du serveur d'opérations de recherche sont localisés dans le serveur de services SS.

Le serveur de gestion SGBD gère une base de données relationnelles composée notamment de tables relationnelles incluant des sous-ensembles de données correspondant aux deuxièmes attributs de base de données.

Dans une variante, le serveur de gestion SGBD est implémenté en tant que module logiciel dans le serveur d'opérations de recherche SOR. Le terminal T et le serveur de services SS n'accèdent plus directement au serveur de gestion SGBD. Le serveur d'opération de recherche constitue alors un serveur LDAP.

Selon la réalisation illustrée à la figure 4, le terminal d'usager T est relié à un réseau d'accès respectif RA par une liaison LT.

Le terminal T est par exemple un terminal de radiocommunications cellulaire mobile T1, la liaison LT est un canal de radiocommunications, et le réseau d'accès respectif RA comprend le réseau fixe d'un réseau de radiocommunications, par exemple de type GSM (Global System for Mobile communications) avec un service GPRS (General Packet Radio Service), ou de type UMTS (Universal Mobile Telecommunications System), et/ou de type 802.1Xx (WiFi).

Selon un autre exemple, le terminal T est un ordinateur personnel T2 relié directement par modem à la liaison LT de type ligne xDSL ou RNIS (Réseau Numérique à Intégration de Services) reliée au réseau d'accès RA correspondant.

Selon un autre exemple, le terminal T est un terminal fixe de télécommunications T3, la liaison LT est une ligne téléphonique et le réseau d'accès respectif RA comprend le réseau téléphonique commuté.

Selon d'autres exemples, le terminal d'usager T comprend un dispositif ou objet électronique de télécommunications personnel à l'usager qui peut être un assistant numérique personnel communicant PDA. Le terminal T peut être tout autre terminal domestique portable ou non tel qu'une console de jeux vidéo, ou un récepteur de télévision intelligent coopérant avec une télécommande à afficheur, ou un clavier alphanumérique servant également de souris à travers une liaison infrarouge.

Les terminaux d'usager T et les réseaux d'accès RA ne sont pas limités aux exemples ci-dessus et peuvent être constitués par d'autres terminaux et réseaux d'accès connus.

Afin de ne pas surcharger la figure 4, on n'a représenté seulement trois terminaux d'usager T1, T2 et T3 désignés indifféremment par T dans la suite de la description.

Par exemple, le procédé selon l'invention est mis en oeuvre pour importer dans un carnet d'adresse d'une messagerie liée au terminal T, utilisant le protocole LDAP pour accéder à des carnets d'adresse, des contacts dont les données sont mémorisées dans une base de données relationnelles.

Des définitions de classes d'objet, de règles structurelles RS et de jointures de tables sont préalablement mémorisées dans un fichier de correspondance FC au format XML établi en fonction de la structure de la base de données relationnelles SGBD liée au serveur d'opérations de recherche SOR.

Une définition d'une classe d'objet comprend notamment les premiers attributs de la classe, les deuxièmes attributs correspondants aux premiers attributs et les tables relationnelles dans lesquelles sont mémorisés les deuxièmes attributs.

Un ou plusieurs deuxièmes attributs appartenant à des tables différentes peuvent correspondre à un premier attribut. Deux tables de données relationnelles ont une jointure lorsqu'elles possèdent deux attributs de même sémantique dont les valeurs sont égales. Les noms des deux attributs sont identiques ou différents. Une jointure ou plusieurs jointures mises en cascade peuvent être associées à un deuxième attribut pour réaliser la correspondance entre le deuxième attribut et un premier attribut. Une jointure ou plusieurs jointures mises en cascade peuvent être associées à la correspondance d'un point de départ et d'une étendue de recherche. Le fichier FC est par exemple mémorisé dans le serveur d'opérations de recherche SOR. Le fichier de correspondance FC au format XML (eXtensible Markup Langage) d'un exemple de référence du procédé de transformation est joint en annexe.

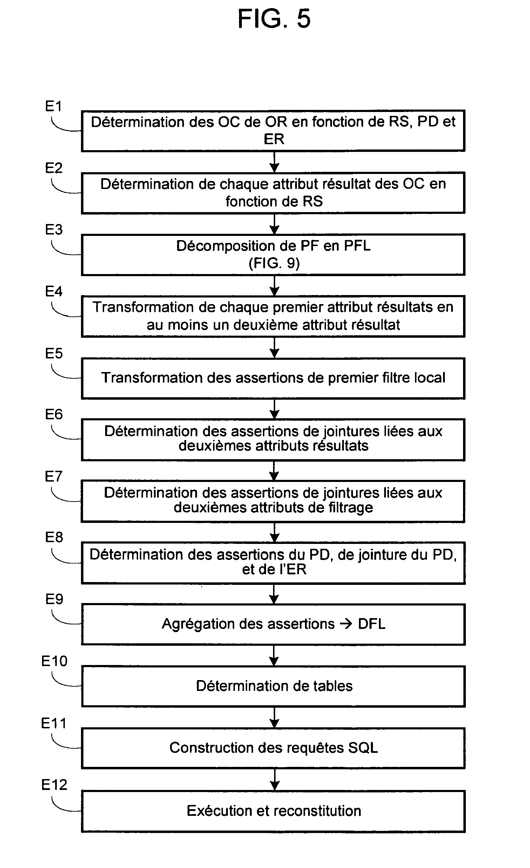

En référence à la figure 5, le procédé de transformation automatique d'une opération de recherche OR selon le protocole LDAP lancée dans le serveur d'opérations de recherche SOR en au moins une requête SQL, selon l'invention, comprend des étapes E1 à E12.

Un terminal T d'un usager ou un serveur de services SS souhaitant effectuer une recherche LDAP transmet au serveur d'opérations de recherche SOR une opération de recherche. En variante, un administrateur du serveur d'opérations de recherche lance directement dans celui-ci l'opération de recherche.

Par exemple, l'opération de recherche est : ldapsearch basedn: "c=France, o=FTR&D" scope: "1" filter:
"(&(|(&(ou=multimediadiv)(|(1=lannion)(1=paris)))(own er=multimediadiv))(|(bc=web)(bc=mobile)))" result: "owner telephoneNumber member cn".

Cet exemple est considéré comme exemple de référence lors de la description du procédé.

Dans cet exemple, le point de départ PD ("basedn") est défini par les assertions suivantes "c=France, o=FTR&D". Les premiers attributs résultats sont "owner télephonenumber member cn". Le premier filtre est
"(&(|(&(ou=multimediadiv)(|(1=lannion)(1=paris)))(own er=multimediadiv)(|(bc=web)(bc=mobile)))". L'étendue de recherche ER est de "1". Une étendue de recherche de "1" signifie que la recherche s'étend entre le point de départ, y compris celui-ci, et un niveau en dessous du point de départ dans l'arbre d'information prédéterminé. Les règles structurelles RS de l'arbre d'information montré à la figure 3 modélisent les liens entre les premiers attributs (RDN) des entrées dans l'arbre et les classes d'objet correspondants à ces premiers attributs.

A l'étape E1, puisque les classes d'objet OC sur lesquelles porte la recherche ne sont pas précisées dans l'opération de recherche OR, le module de détermination de classe MDC détermine les classes d'objet OC des premiers attributs de filtrage concernées par la recherche à partir des règles structurelles RS de l'arbre d'information prédéterminé,du point de départ PD et de l'étendue de recherche ER. Dans l'exemple, le module de détermination de classe MDC parcourt la représentation arborescente de règles structurelles (montré à la figure 3) à partir de l'attribut dont le nom relatif est "c" et compare, lors du parcours, les premiers attributs avec ceux définissant le point de départ PD, afin de déterminer la classe d'objet correspondant au point de départ. La classe d'objet correspondant au point de départ PD est "organization", puisque le premier attribut "o" définissant le point de départ PD est associé à la classe "organization". L'étendue de recherche ER étant de 1, le module de détermination de classe MDC continue le parcours de la représentation arborescente de règles structurelles sur le niveau inférieur à la classe d'objet du point de départ PD et sélectionne ainsi les classes d'objet immédiatement inférieures à la classe d'objet "organization", soit les classes "groupOfName" et "organizationUnit". Les classes d'objet sur lesquelles portent la recherche sont "organization", "groupOfName" et "organizationUnit".

A l'étape E2, le module de détermination de classe MDC détermine les premiers attributs résultats de chaque classe d'objet déterminée à l'étape E1 en fonction des règles structurelles et des définitions des classes d'objet. Les définitions des classes d'objet définissent les premiers attributs d'une classe. Dans l'exemple, le premier attribut résultat "telephoneNumber" est associé aux classes "organization" et "organizationUnit", et les premiers attributs résultats "cn", "member" et "owner" sont associés à la classe "groupOfName".

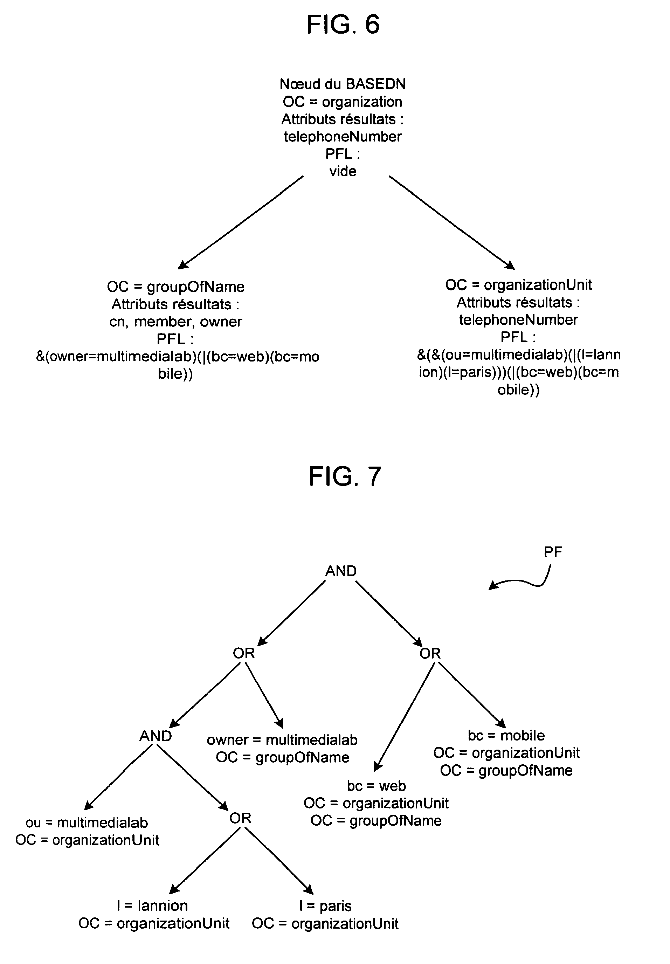

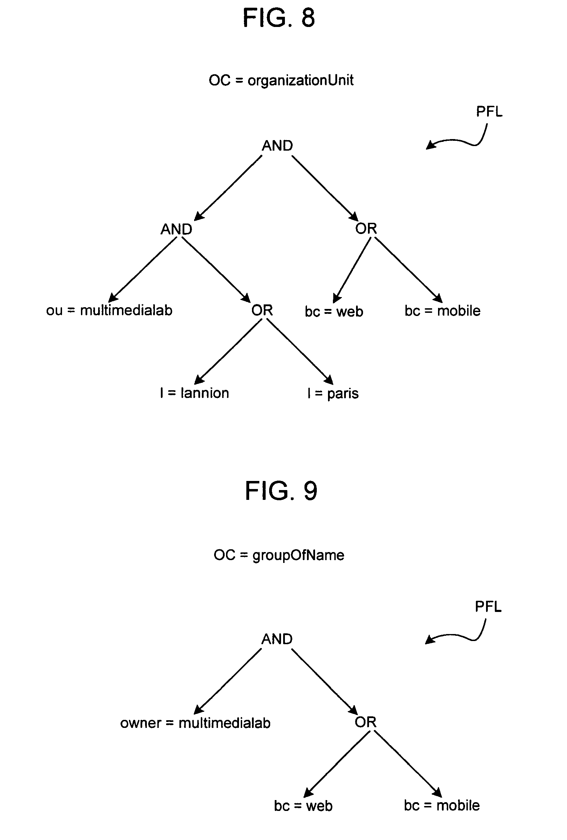

A l'étape E3, le module de décomposition de premier filtre MD décompose le premier filtre PF inclus dans l'opération de recherche OR en un premier filtre local PFL pour chaque classe d'objet déterminée. Un premier filtre local PFL est un filtre dont les premiers attributs ne se réfèrent qu'à une seule classe d'objet. Le premier filtre local PFL est décomposé selon un procédé de décomposition et d'optimisation de premier filtre en un premier filtre local décrit plus bas. Une représentation arborescente, utilisée par le procédé, du premier filtre de l'exemple est montrée à la figure 7, les deux arbres des deux premiers filtres locaux obtenus sont montrés respectivement aux figures 8 et 9. Le résultat de la décomposition est deux premiers filtres locaux, l'un portant sur la classe "organizationUnit" et l'autre sur "groupOfName". Un filtre vide est déterminé pour la classe d'objet "organization", par conséquent aucune recherche n'est à réaliser dans cette classe.

Le premier filtre local portant sur la classe "organizationUnit" est "&(&(ou = multimedialab)(|(1 = lannion)(1 = paris)))(|(bc = web) (bc = mobile))". Le premier filtre local portant sur la classe "groupOfName" est "&(owner = multimedialab)(|(bc = web)(bc = mobile))".

Un arbre de résultats correspondant à l'opération de recherche OR a été progressivement construit durant les étapes 1, 2 et 3. L'arbre de résultats obtenu est un sous-arbre correspondant au point de départ de l'opération de recherche dans la représentation arborescente de règles structurelles, chaque noeud de l'arbre fournit les premiers attributs résultats et le premier filtre local PFL correspondant à la classe d'objet de ce noeud. L'étendue de recherche ER correspond aux différentes branches de l'arbre de résultats. L'arbre de résultats correspondant à l'exemple est représenté à la figure 6.

Chaque noeud de l'arbre de résultats fournit les informations initiales permettant de transformer, dans les étapes suivantes, une opération de recherche locale portant sur une seule classe d'objet, en une requête SQL.

L'arbre de résultat est aussi une représentation d'un plan d'exécution de requêtes SQL correspondant aux opérations de recherche locales. Les requêtes SQL seront exécutées, lors de la dernière étape, dans un ordre correspondant à un parcours de l'arbre de résultats. Le procédé permet d'utiliser plusieurs parcours de l'arbre de résultats.

L'objectif des étapes suivantes est de construire une requête SQL pour chaque classe trouvée dans l'arbre de résultats et pour laquelle le premier filtre local n'est pas vide. Dans l'exemple, deux requêtes sont à construire pour les classes "organizationUnit" et "groupOfName". L'ensemble des requêtes SQL construites sera le résultat de la transformation de l'opération de recherche OR.

A l'étape E4, le module de transformation MT transforme les premiers attributs résultats associés à chaque classe d'objet en des deuxièmes attributs résultats. La transformation consiste à remplacer un premier attribut résultat par un ou plusieurs deuxièmes attributs résultats correspondants en fonction du fichier de correspondance FC. Les deuxièmes attributs résultats correspondants peuvent être dans des tables de données différentes. Dans l'exemple, le premier attribut résultat "cn" est remplacé par "list.name", "member" par "memberlist.member", et "owner" par "list.labname".

L'objectif des étapes E5 à E9 est de transformer chaque premier filtre local PFL associé à une classe respectivement en un deuxième filtre local DFL pour requête SQL.

Les étapes E5 à E9 sont appliquées à chaque premier filtre local PFL.

A l'étape E5, le module de transformation MT transforme chaque assertion du premier filtre local PFL composée de premier attribut de filtrage en une ou plusieurs assertions composées de deuxième attribut de filtrage en fonction du fichier de correspondance (FC). Plus précisément, l'étape E5 consiste à remplacer chaque assertion composée d'un premier attribut de filtrage et de la valeur de filtrage associée par une ou plusieurs assertions composées d'une part de deuxième attribut de filtrage correspondant au premier attribut de filtrage et d'autre part de la valeur de filtrage associée. Les correspondances entre les deuxièmes attributs de filtrage et les premiers attributs de filtrage dans la ou les tables de données relationnelles sont déterminées grâce au fichier de correspondance FC. Dans le cas d'une transformation d'une assertion composée de premier attribut de filtrage en plusieurs assertions composées de deuxièmes attributs de filtrage, des opérateurs logiques "or" sont ajoutés entre chacune des assertions.

Dans l'exemple, le premier filtre local associé à la classe "groupOfName" devient "(list.labname = "multimedia") and (list.client = "web" or list.client = "mobile")". Le premier filtre local associé à la classe "organizationUnit" devient "((laboratories.name = "multimedia") and (laboratories.city = "lannion" or laboratories.city = "paris")) and (laboratories.client = "web" or laboratories.client = "mobile")".

A l'étape E6, le module de transformation MT détermine les assertions de jointure relatives aux deuxièmes attributs résultats déterminés à l'étape E4. Les deuxièmes attributs résultats peuvent être mémorisés dans différentes tables de la base de données relationnelles. Par conséquent, afin de lier les différentes tables, le module de transformation MT détermine en consultant le fichier de correspondance FC les assertions de jointure relatives aux deuxièmes attributs résultats.

Le procédé permet d'utiliser plusieurs assertions de jointure pour un unique deuxième attribut résultat.

Dans l'exemple, pour la classe "groupOfName", afin d'obtenir le deuxième attribut résultat "member" qui appartient à la table "memberlist", alors que le deuxième filtre local DFL associé à la classe "groupOfName" ne porte que sur la table "list", il faut lier les deux tables "list" et "memberlist" dans le deuxième filtre local. La table memberlist comprend deux deuxièmes attributs "listname" et "member". Le deuxième attribut "listname" prend les mêmes valeurs que le deuxième attribut "name" de la table "list". Ces deux deuxièmes attributs constituent une jointure entre les deux tables. Afin de lier ces deux tables "list" et "memberlist", l'assertion de jointure "list.name = memberlist.listname" est déterminée.

Dans l'exemple, pour la classe "organizationUnit", afin d'obtenir le deuxième attribut résultat "telephone" qui appartient à la table "allphones", alors que le deuxième filtre local associé à la classe "organizationUnit" ne porte que sur la table "laboratories", il faut lier les deux tables "laboratories" et "allphones". La table "allphones" comprend deux deuxièmes attributs "labname" et "telephone", le deuxième attribut "labname" prend les mêmes valeurs que le deuxième attribut "name" de la table "laboratories". Afin de lier ces deux tables "laboratories" et "allphones", l'assertion de jointure "allphones.labname = laboratories.name" est déterminée.

A l'étape E7, le module de transformation MT détermine les assertions de jointure relatives aux deuxièmes attributs de filtrage déterminés à l'étape E5. Les deuxièmes attributs de filtrage peuvent être mémorisés dans différentes tables de la base de données relationnelles. Par conséquent, afin de lier les différentes tables, le module de transformation MT détermine en consultant le fichier de correspondance FC les assertions de jointure relatives aux deuxièmes attributs de filtrage, comme à l'étape E6.

A l'étape E8, le module de transformation MT détermine les assertions du point de départ PD et les assertions de jointure relatives aux deuxièmes attributs du point de départ PD et à l'étendue de recherche. En effet, il ne faut pas omettre les conditions liées au point de départ PD. Le module de transformation MT transforme les premiers attributs des assertions du point de départ PD en des deuxièmes attributs du point de départ en fonction des données du fichier de correspondance FC. Dans l'exemple, les assertions du point de départ "c = France" et "o = FTR&D" deviennent "state.country = France" et "department.name = FTR&D".

Le module de transformation MT détermine également les assertions de jointure relatives aux deuxièmes attributs du point de départ PD et à l'étendue de recherche ER pour la classe concernée, en fonction des données du fichier de correspondance FC, plus précisément en fonction des jointures relationnelles définies dans celui-ci et associées aux règles structurelles de l'arbre d'information. Le procédé permet d'utiliser des jointures qui ne correspondent pas obligatoirement aux correspondances des assertions du point de départ.

Dans l'exemple, les tables "state" et "department" sont liés respectivement par le deuxième attribut commun "country", les tables "department" et "laboratories" sont liées respectivement par les deuxièmes attributs "name" et "depname". Le module de transformation MT déduit l'assertion de jointure correspondant au point de départ de l'exemple: "state.country = department.country" et l'assertion de jointure pour l'étendue de recherche de valeur 1 pour la classe "organizationUnit" : "department.name = laboratories.depname".

A l'étape E9, le module de transformation MT agrège les assertions composées de deuxième attribut de filtrage déterminées à l'étape E5, les assertions correspondant au point de départ PD et les assertions de jointure relatives au point de départ et à l'étendue de recherche afin de déterminer le deuxième filtre local DFL associé à la classe. Selon des variantes, l'agrégation dans ce deuxième filtre local est complétée en agrégeant les assertions précédentes du deuxième filtre local et/ou les assertions de jointure relatives aux deuxièmes attributs résultats déterminées à l'étape E6, et/ou les assertions de jointure relatives aux deuxièmes attributs de filtrage déterminées à l'étape E7.A chaque ajout d'une assertion, l'opérateur logique "and" est ajouté pour lier la partie précédente du deuxième filtre à l'assertion ajoutée.

A l'étape E10, le module de transformation MT détermine les tables de données relationnelles associées aux deuxièmes attributs résultats et aux deuxièmes attributs de filtrage afin de déterminer la dite clause "from".

A l'étape E11, le module de transformation MT construit chaque requête SQL associée à chaque classe, avec les deuxièmes attributs résultats, le deuxième filtre local et en ajoutant les tables de données sélectionnées après la déclaration du "FROM" du langage SQL.

Dans l'exemple, la requête SQL portant sur les données liées à la classe "groupOfName" est :

SELECT list.name, memberlist.member, list.labname FROM list, memberlist, department, state WHERE (((list.client = "web" or list.client = "mobile") and list.labname = "multimedia") and list.name = memberlist.listname) and (state.country = "fr" and department.name = "FTR&D" and state.country = department.country and department.name = list.depname).

Dans l'exemple, la requête SQL portant sur les données liées à la classe "organizationUnit" est :

SELECT allphones.telephone FROM allphones, laboratories, department, state where ((laboratories.name = "multimedia") and (laboratories.city = "lannion" or laboratories.city = "paris")) and (laboratories.client = "web" or laboratories.client = "mobile") and (state.country = "fr" and department.name = "FTR&D" and state.country = department.country and department.name = list.depname).

A l'étape E12, le module de restitution des résultats RR exécute chacune des requêtes SQL en suivant un ordonnancement d'exécution correspondant à un parcours de l'arbre des résultats.

Après chaque exécution, le module de restitution des résultats RR reconstitue les résultats de chaque exécution sous forme de premiers attributs à partir du fichier de correspondance FC.

Les résultats de toutes les requêtes SQL sont retournés au fur et à mesure de leur exécution et de leur reconstitution selon le mode asynchrone LDAP au terminal T ou au serveur de services SS.

L'unité centrale UC exécute les instructions de programmes qui lui sont fournies par les autres modules.

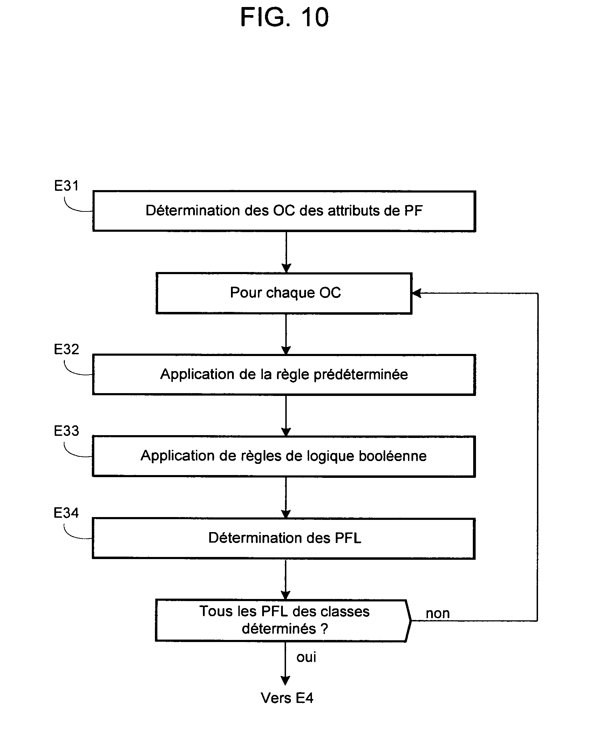

Le procédé de décomposition et d'optimisation d'un premier filtre en au moins un premier filtre local optimisé comprend des étapes E31 à E34 montré à la figure 10.

L'objectif de ce procédé est de décomposer un premier filtre en au moins un premier filtre local et d'optimiser les premiers filtres locaux obtenus, c'est-à-dire réduire la complexité des premiers filtres locaux, ce qui permettra lors de l'exécution ultérieure des requêtes SQL obtenues à partir de ces filtres locaux, une optimisation des temps de traitement, en évitant au serveur SGBD de réaliser des recherches correspondant à des assertions dont on connaît par avance le résultat. Le premier filtre PF de l'exemple est "(&(|(&(ou=multimediadiv)(|(1=lannion)(1=paris)))(own er=multimediadiv))(|(bc=web)(bc=mobile)))".

Le premier filtre PF est représenté dans le procédé sous la forme d'un arbre de premier filtre. L'arbre du premier filtre PF est construit par les liens entre les différentes assertions qui composent le premier filtre. L'arbre du premier filtre de l'exemple est montré à la figure 7.

A l'étape E31, le module de décomposition MD consulte le fichier de correspondance FC afin de déterminer les classes d'objet OC auxquelles les premiers attributs du premier filtre appartiennent. Les classes d'objet des premiers attributs du premier filtre PF de l'exemple sont indiquées sur la figure 7.

Les étapes suivantes sont exécutées pour chaque classe déterminée par le module de détermination de classes lors de l'étape E1, dans l'exemple pour chacune des classes "organization", "organizationUnit" et "groupOfName". Suivant le résultat des traitements réalisés dans les étapes suivantes, un premier filtre local associé à une classe d'objet peut être vide. Dans ce cas, aucune requête n'est associée à cette classe d'objet. La décomposition et l'optimisation du premier filtre consistent en une application de règles prédéterminées sur le premier filtre.

A l'étape E32, le module de décomposition MD applique sur le premier filtre PF la règle prédéterminée suivante : les assertions de la classe sont déclarées comme indéfinies et les assertions des autres classes comme fausses. Le premier filtre local PFL est obtenu par réduction du premier filtre PF en recherchant et éliminant les assertions vraies et fausses afin de ne conserver que les assertions indéfinies. Une assertion résultante est le résultat de l'application d'un opérateur logique tel que "AND", "OR" ou "NOT" aux deux assertions liées à cet opérateur logique et issues du premier filtre. Par exemple, l'assertion (|(1 = lannion)(1 = paris)) est une assertion résultante.

A l'étape E33, le module de décomposition MD applique sur les assertions du premier filtre PF les règles de logique booléenne suivantes :
si une assertion d'un opérateur logique "AND" est fausse, l'assertion résultante est fausse ;
si deux assertions d'un opérateur logique "AND" sont vraies, l'assertion résultante est vraie ;
si l'une des assertions d'un opérateur logique "AND" est indéfinie et l'autre assertion vraie ou indéfinie, l'assertion résultante est indéfinie ;
si l'une des assertions d'un opérateur logique "OR" est vraie, l'assertion résultante est vraie ;
si les deux assertions d'un opérateur logique "OR" sont fausses, l'assertion résultante est fausse ;
si l'une des assertions d'un opérateur logique "OR" est indéfinie et l'autre assertion est indéfinie ou fausse, l'assertion résultante est indéfinie ;
si l'assertion d'un opérateur logique "NOT" est fausse, l'assertion résultante est vraie ;
si l'assertion d'un opérateur logique "NOT" est vraie, l'assertion résultante est fausse ;
si l'assertion d'un opérateur logique "NOT" est indéfinie, l'assertion résultante est indéfinie.

A l'étape E34, le module de décomposition MD détermine les premiers filtres locaux PFL en ne conservant que les assertions indéfinies et en supprimant par logique booléenne les assertions vraies ou fausses. Ainsi, les règles prédéterminées peuvent utiliser une logique booléenne étendue aux états indéfinis.

Dans l'exemple, aucun premier attribut du premier filtre PF n'appartient à la classe "organization". Par conséquent, le premier filtre local sur "organization" n'existe pas contrairement aux premiers filtres locaux sur "organizationUnit" et "groupOfName". Le premier filtre PF selon l'exemple est décomposé en deux premiers filtres locaux PFL portant sur les classes d'objet "organizationUnit" et "groupOfName" montrés respectivement aux figures 8 et 9. Dans l'exemple, le premier attribut "bc" appartient aux deux classes "organizationUnit" et "groupOfName" et par conséquent est présent dans les deux premiers filtres locaux portant respectivement sur les deux classes. Pour l'obtention du premier filtre local portant sur la classe "organizationUnit", l'assertion "owner = multimedialab" de l'opérateur "OR" est considérée comme fausse parce que l'attribut "owner" n'appartient pas à la classe "organizationUnit". L'assertion résultante est indéfinie et doit être conservée. De plus, selon la logique booléenne, l'assertion "owner = multimedialab" étant fausse, elle est supprimée, et l'opérateur "OR" appliqué à cette assertion est supprimé. L'assertion dépendant de l'autre assertion de l'opérateur "OR" est conservée et prend la place de l'opérateur "OR".

Le premier filtre local portant sur la classe "organizationUnit" est "&(&(ou=multimedialab)(|(1=lannion)(1=paris)))(|(bc=*w* eb)(bc=mobile))".

Le premier filtre local portant sur la classe "groupOfName" est "&(owner = multimedialab)(|(bc = web)(bc = mobile))".

L'invention décrite ici concerne un procédé et un système informatique de transformation d'opération de recherche en requête. Selon une implémentation préférée, les étapes du procédé sont déterminées par les instructions d'un programme de transformation d'opération de recherche en requête incorporé dans le serveur d'opération de recherche SOR, et le procédé selon l'invention est mis en oeuvre lorsque ce programme est chargé dans le serveur d'opération de recherche SOR dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, ou de code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ("floppy disc") ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'informations peut être un circuit intégré dans lequel le programme est incorporé, le circuit étant adapté pour exécuter ou pour être utilisé dans l'exécution du procédé selon l'invention.

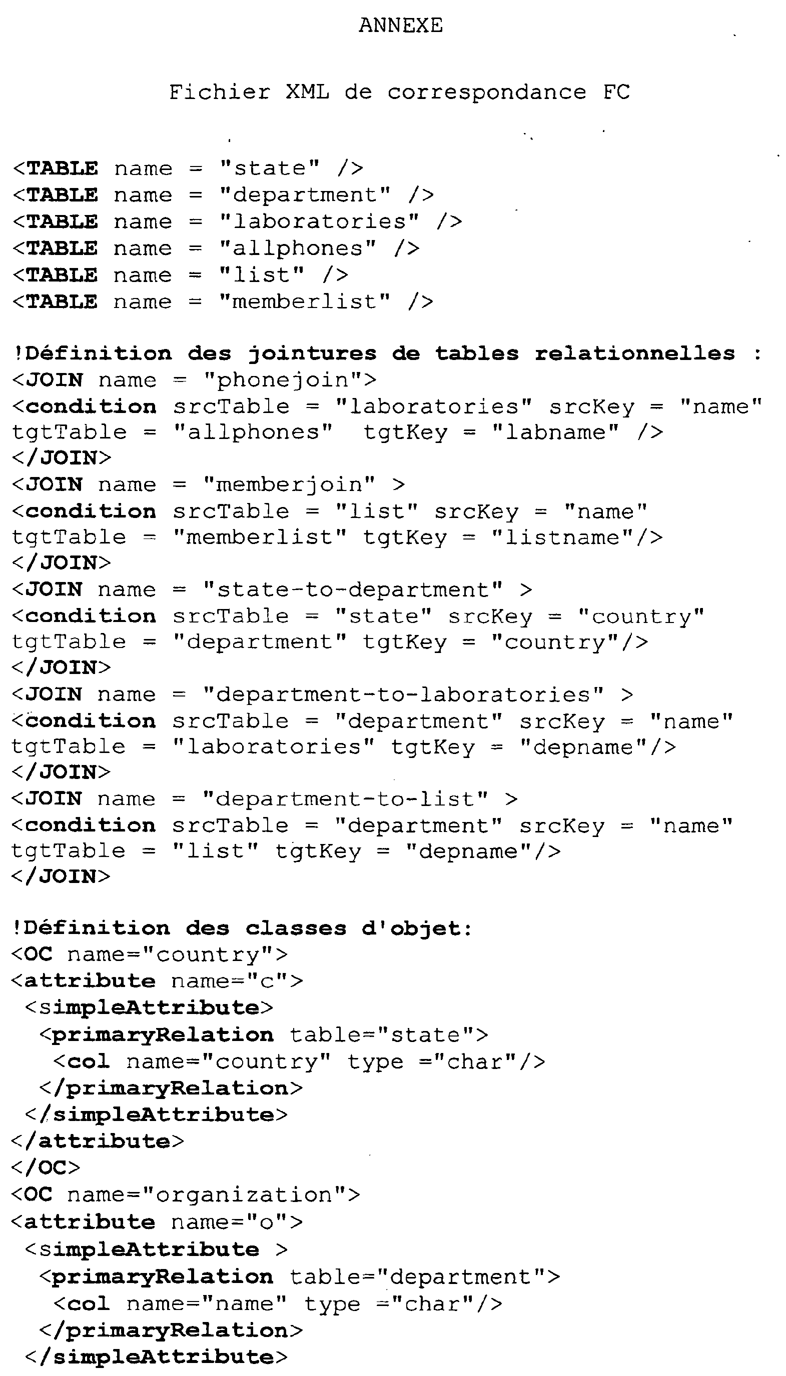

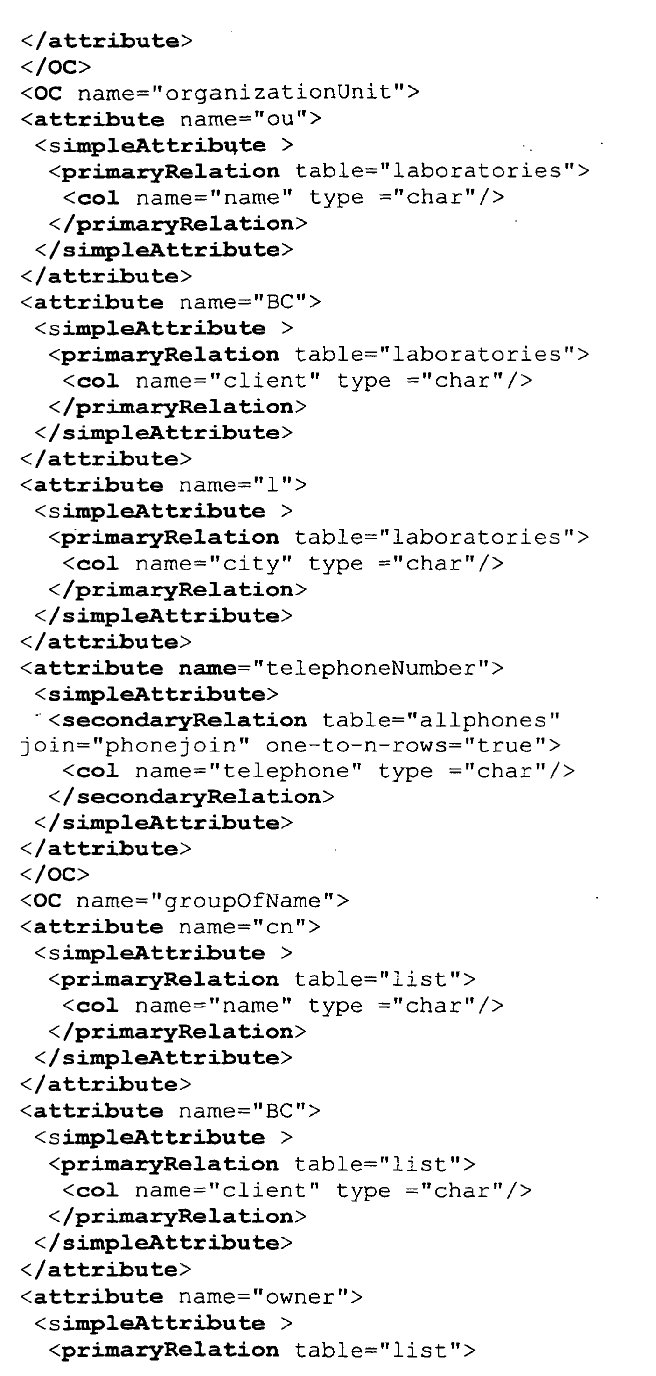

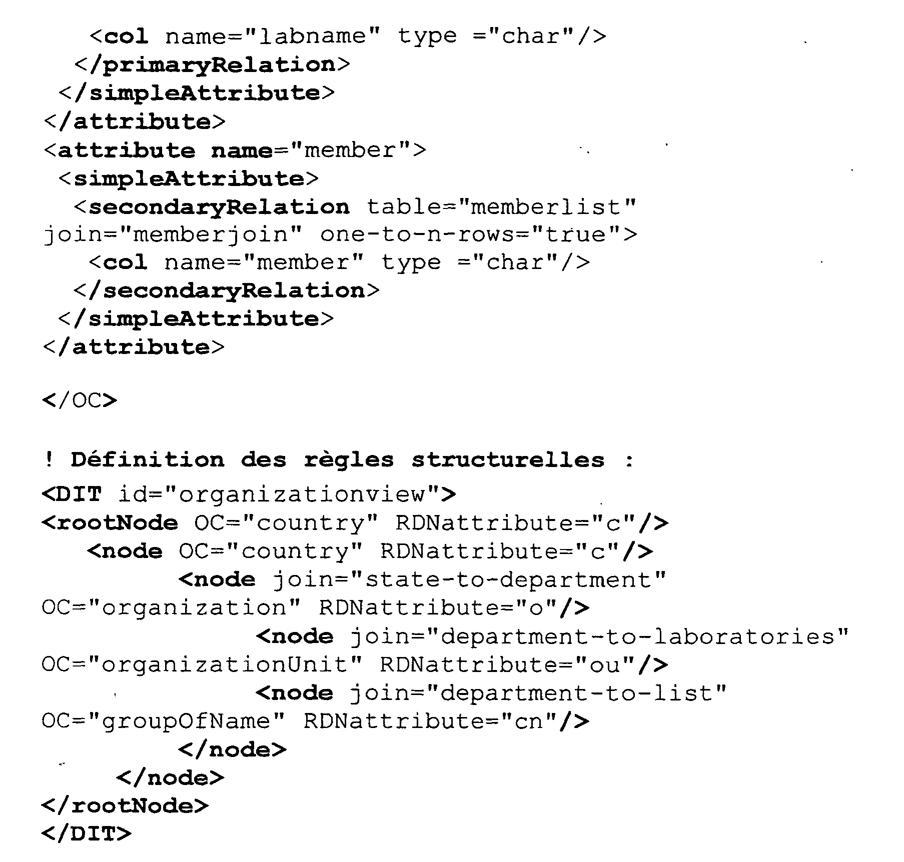

## Revendications

1. Procédé de transformation d'une opération de recherche (OR) en au moins une requête, l'opération de recherche incluant notamment un premier filtre (PF) comportant au moins une assertion relative à des premiers attributs de filtrage, des premiers attributs résultats, un point de départ (PD) défini par des assertions relatives à des premiers attributs, et une étendue de recherche (ER) définie par un nombre entier, **caractérisé en ce qu'**il comprend les étapes suivantes :
mémorisation préalable de définitions de classes d'objet et de règles structurelles (RS) dans un fichier de correspondance (FC) établi en fonction de la structure d'une base de données relationnelles (SGBD) préexistante,
détermination (E1) des classes d'objet (OC) concernées par la recherche en fonction des règles structurelles (RS), du point de départ (PD) et de l'étendue de recherche (ER),
détermination (E2) des premiers attributs résultat de chaque classe d'objet déterminée en fonction des règles structurelles (RS) et des définitions de classes d'objet,
décomposition et optimisation (E3) du premier filtre (PF) en des premiers filtres locaux (PFL) respectivement pour les classes d'objet déterminées, et
pour chaque classe déterminée dont le premier filtre local n'est pas vide :
transformation (E4) de chaque premier attribut résultat déterminé et associé à la classe en un ou plusieurs deuxièmes attributs résultats associés à la classe en fonction du fichier de correspondance (FC),
transformation (E5) de chaque premier attribut de filtrage du premier filtre local (PFL) associé à la classe en un ou plusieurs deuxièmes attributs de filtrage en fonction du fichier de correspondance (FC),
une détermination des assertions de jointures associées à la classe relatives au point de départ (PD) et à l'étendue de recherche (ED),
agrégation (E9) des assertions du premier filtre local relatives aux deuxièmes attributs de filtrage, des assertions du point de départ (PD) et des assertions de jointures associées à la classe relatives au point de départ et à l'étendue de recherche associées à la classe afin de déterminer un deuxième filtre local (DFL) associé à la classe et incluant des deuxièmes attributs de filtrage,
détermination (E10) des tables de données relationnelles associées aux deuxièmes attributs résultats et aux deuxièmes attributs de filtrage, et
construction (E11) de la requête associée à la classe avec les deuxièmes attributs résultats, le deuxième filtre local (DFL) et les tables de données déterminées associés à la classe.

2. Procédé conforme à la revendication 1, comprenant une mémorisation préalable de jointures de tables dans le fichier de correspondance (FC).

3. Procédé conforme à la revendication 2, comprenant pour chaque classe déterminée dont le premier filtre local n'est pas vide, une détermination (E6) des assertions de jointure relatives aux deuxièmes attributs résultats associés à la classe et une agrégation (E9) des assertions de jointure relatives aux deuxièmes attributs résultats associés à la classe et des assertions du deuxième filtre local associé à la classe dans le deuxième filtre local (DFL) associé à la classe afin de construire la requête associée à la classe en fonction du deuxième filtre local (DFL).

4. Procédé conforme à la revendication 2 ou 3, comprenant pour chaque classe déterminée dont le premier filtre local n'est pas vide, une détermination (E7) des assertions de jointure relatives aux deuxièmes attributs de filtrage associés à la classe et une agrégation (E9) des assertions de jointure relatives aux deuxièmes attributs de filtrage associés à la classe et des assertions du deuxième filtre local associé à la classe dans le deuxième filtre local (DFL) associé à la classe afin de construire la requête associée à la classe en fonction du deuxième filtre local (DFL).

5. Procédé conforme à l'une quelconque des revendications 1 à 4, comprenant une exécution des requêtes (E12) en suivant un ordonnancement d'exécution correspondant à un parcours d'un arbre de résultats.

6. Procédé conforme à l'une quelconque des revendications 1 à 5, comprenant une reconstitution des résultats d'une exécution de chaque requête sous forme de premiers attributs à partir du fichier de correspondance (FC).

7. Procédé conforme à l'une quelconque des revendications 1 à 6, selon lequel la décomposition et l'optimisation du premier filtre consistent en une application de règles prédéterminées sur le premier filtre.

8. Procédé conforme à la revendication 7, selon lequel les règles prédéterminées utilisent une logique booléenne étendue aux états indéfinis.

9. Serveur d'opération de recherche (SOR) pour transformer une opération de recherche (OR) en au moins une requête, l'opération de recherche incluant notamment un premier filtre (PF) comportant au moins une assertion relative à des premiers attributs de filtrage, des premiers attributs résultats, un point de départ (PD) défini par des assertions relatives à des premiers attributs, et une étendue de recherche (ER) définie par un nombre entier, **caractérisé en ce qu'**il comprend :
un moyen de mémorisation (UC) préalable de définitions de classes d'objet et de règles structurelles (RS) dans un fichier de correspondance (FC) établi en fonction de la structure d'une base de données relationnelles (SGBD) préexistante et liée au serveur d'opérations de recherche (SOR),
un moyen de détermination (MDC) des classes d'objet (OC) concernées par la recherche en fonction des règles structurelles (RS), du point de départ (PD) et de l'étendue de recherche (ER),
un moyen de détermination (MDC) des premiers attributs résultat de chaque classe d'objet déterminée en fonction des règles structurelles (RS) et des définitions de classes d'objet,
un moyen de décomposition et d'optimisation (MD) du premier filtre (PF) en des premiers filtres locaux (PFL) respectivement pour les classes d'objet déterminées, et
les moyens suivants pour construire la requête associée à chaque classe déterminée dont le premier filtre local n'est pas vide :
un moyen de transformation (MT) de chaque premier attribut résultat déterminé et associé à la classe en un ou plusieurs deuxièmes attributs résultats associés à la classe en fonction du fichier de correspondance (FC),
un moyen de transformation (MT) de chaque premier attribut de filtrage du premier filtre local (PFL) associé à la classe en un ou plusieurs deuxièmes attributs de filtrage en fonction du fichier de correspondance (FC),
un moyen de détermination (MT) des assertions de jointures associées à la classe relatives au point de départ et à l'étendue de recherche,
un moyen d'agrégation (MT) des assertions du premier filtre local relatives aux deuxièmes attributs de filtrage, des assertions du point de départ (PD) et des assertions de jointures associées à la classe relatives au point de départ et à l'étendue de recherche (ER) associées à la classe afin de déterminer un deuxième filtre local (DFL) associée à la classe et incluant des deuxièmes attributs de filtrage,
un moyen de détermination (MT) des tables de données relationnelles associées aux deuxièmes attributs résultats et aux deuxièmes attributs de filtrage, et
un moyen de construction (MT) de la requête associée à la classe avec les deuxièmes attributs résultats, le deuxième filtre local (DFL) et les tables de données déterminées associés à la classe.
